# EUROPÄISCHE PATENTSCHRIFT

(11) **EP 0 759 830 B1**
(45) Veröffentlichungstag und Bekanntmachung des Hinweises auf die Patenterteilung: **24.11.1999**
(21) Anmeldenummer: 95917910.2
(22) Anmeldetag: 11.05.1995
(51) Int. Cl.: B23K 20/02

(54) **VORRICHTUNG ZUR AUFNAHME UND FÜHRUNG EINER VERBINDUNGSEINRICHTUNG**
DEVICE FOR HOLDING AND GUIDING A JOINING COMPONENT
DISPOSITIF DE FIXATION ET DE GUIDAGE D'UN ELEMENT D'ASSEMBLAGE

(30) Priorität: 19.05.1994 DE 4417625
(43) Veröffentlichungstag der Anmeldung: 05.03.1997
(73) Patentinhaber: Finn, David, 87629 Füssen-Weissensee (DE); Rietzler, Manfred, 87616 Marktoberdorf (DE)
(72) Erfinder: Finn, David, 87629 Füssen-Weissensee (DE); Rietzler, Manfred, 87616 Marktoberdorf (DE)
(74) Vertreter: Böck, Bernhard, Dipl.-Ing.
(86) Internationale Anmeldenummer: DE9500642
(87) Internationale Veröffentlichungsnummer: WO9532073

(56) Entgegenhaltungen:
- EP-A- 0 209 438
- EP-A- 0 476 912
- US-A- 4 605 833
- SOVIET PATENT ABSTRACTS Week 9107 Derwent Publications Ltd., London, GB; AN 91-050382 & SU-A-1 574 405 (AKIMOV V N) , 30.Juni 1990

## Beschreibung

Die vorliegende Erfindung betrifft eine Vorrichtung zur Aufnahme und Führung einer Werkzeugeinrichtung, insbesondere einer Verbindungseinrichtung, nach dem Oberbegriff des Anspruchs 1.

Zur Automatisierung der Herstellung von elektrisch leitfähigen Verbindungen zwischen Kontaktelementen, wie etwa den Anschlußflächen eines Chips und daran angeschlossene Leitungen, werden bislang in der Regel pneumatisch betriebene Vorrichtungen eingesetzt. Hierbei wird die eigentliche Verbindungseinrichtung, die etwa als eine Thermokompressionseinrichtung ausgebildet sein kann, längs einer Zustellachse der Vorrichtung gegen die Verbindungsstelle der Kontaktelemente gefahren, um im Fall der Thermokompressionseinrichtung unter Einwirkung von Druck und Temperatur eine Löt- bzw. Schweißverbindung zwischen den Kontaktelementen herzustellen. Dabei stellt die Einstellung der Kraft, mit der die Verbindungseinrichtung gegen die Verbindungsstelle gefahren wird, um dort den Verbindungsdruck zu erzeugen, ein Optimierungsproblem dar. Einerseits muß im Fall des Thermokompressionsverfahrens ein der Verbindungstemperatur angepaßter Verbindungsdruck eingestellt werden, zum anderen darf der Verbindungsdruck einen vorgegebenen Maximalwert nicht überschreiten, um eine mechanische Beschädigung der empfindlichen mikroelektronischen Bauelemente zu vermeiden.

Bei einer bekannten Vorrichtung wird die Verbindungseinrichtung mittels eines pneumatischen Stellzylinders gegen die Vebindungsstelle gefahren, wobei die Stellzylinder auch gleichzeitig den notwendigen Verbindungsdruck erzeugt. Der pneumatische Stellzylinder besteht aus einer Kolben/Zylinder-Einheit, bei der auf Grund der Führung des Kolbens im Zylinder mechanische Reibungskräfte erzeugt werden, die sich zudem noch über den Kolbenhub ändern. Dies fuhrt dazu, daß sich selbst bei konstant eingestelltem Luftdruck die tatsächlich auf die Verbindungsstelle durch den pneumatischen Stellzylinder ausgeübte Verbindungskraft ändert. Hinzu kommen Kompressibilitätseffekte der Luft, so daß durch die bekannte Vorrichtung kein exakt reproduzierbarer Kraftwert an der Verbindungsstelle und ein dementsprechender Verbindungsdruck erzeugt werden kann. Dies führt bei einer Serienherstellung derartiger Verbindungen zu relativ hohen Ausschußquoten.

Aus der EP-A-0 476 912 ist eine Vorrichtung zur Aufnahme und Führung einer Werkzeugeinrichtung bekannt, die eine mittels eines Stellorgans längs einer Zustellachse über eine Zustelleinrichtung bewegbare Aufnahmeeinrichtung zur Aufnahme der Werkzeugeinrichtung und eine Kraftmeßeinrichtung aufweist. Bei der bekannten Vorrichtung bildet die Kraftmeßeinrichtung einen integralen Bestandteil der Aufnahmeeinrichtung.

Aus der SU-A-1 574 405 ist eine Vorrichtung bekannt, die eine Deformationsmessung an einem in einem Schweißverfahren beaufschlagten Drahtleiter ermöglicht.

Der vorliegenden Erfindung liegt die Aufgabe zugrunde, eine Vorrichtung der eingangs genannten Art zu schaffen, die die Einstellung einer genau reproduzierbaren Verbindungskraft an einer Verbindungsstelle ermöglicht und somit die Ausschußquote bei der Herstellung derartiger Verbindungen in entscheidendem Maße verringert.

Diese Aufgabe wird durch eine Vorrichtung mit den Merkmalen des Anspruchs 1 gelöst.

Die erfindungsgemäße Vorrichtung weist eine mittels eines Stellorgangs längs einer Zustellachse bewegbare Zustelleinrichtung und eine längs einer Bewegungsachse bewegbare Aufnahmeeinrichtung auf, derart, daß die Aufnahmeeinrichtung relativ zur Zustelleinrichtung bewegbar ist, wobei an der Zustelleinrichtung eine Kraftmeßeinrichtung und zwischen der Kraftmeßeinrichtung und der Aufnahmeeinrichtung ein elastisches Element angeordnet ist, derart, daß das elastische Element bei einer Relativbewegung zwischen der Kraftmeßeinrichtung und der Aufnahmeeinrichtung deformiert wird.

Die erfindungsgemäße Vorrichtung ermöglicht eine Zustellbewegung der Verbindungseinrichtung gegen die Verbindungsstelle, die unmittelbar kraftabhängig ist. Gleichzeitig ermöglicht die erfindungsgemäße Vorrichtung auf Grund des zwischen die Kraftmeßeinrichtung und der Aufnahmeeinrichtung geschalteten elastischen Elements eine Dämpfung des Aufprallstosses, wenn die Verbindungseinrichtung auf die Verbindungsstelle trifft. Das elastische Element ermöglicht eine Masseentkopplung zwischen der Aufnahmeeinrichtung und der Zustelleinrichtung, so daß die Aufprallmasse entscheidend verringert wird. Dabei ist das elastische Element schwingungsmechanisch in Reihe liegend mit der Aufnahmeeinrichtung und der Kraftmeßeinrichtung angeordnet, so daß die durch die Deformation des elastischen Elements erzeugte elastische Kraft nicht zu einer Verfälschung des von der Kraftmeßeinrichtung erzeugten Kraftsignals führt.

Die erfindungsgemäße Vorrichtung ist nicht auf die Anwendung im Bereich der Verbindungstechnik beschränkt, sondern ermöglicht unabhängig von dem Anwendungsfall, beispielsweise auch im Bereich der SMD-Technik, eine kraftabhängige Zustellbewegung der Zustelleinrichtung bis zum Erreichen einer dem Kraftmeßsignal entsprechenden, vorgegebenen Andruckkraft. Da die tatsächliche, beispielsweise an der Verbindungsstelle vorliegende Druckkraft durch die Kraftmeßeinrichtung gemessen wird, ist der dadurch erzeugte Anpreßdruck beliebig oft genau reproduzierbar.

Bei einer bevorzugten Ausführungsform der erfindungsgemäßen Vorrichtung ist zur Bewegung der Zustelleinrichtung längs der Zustellachse ein mit dem Stellorgan gekoppelter, vorzugsweise als Spindelantrieb ausgebildeter Drehantrieb vorgesehen. Hierdurch ist ein besonders exakt in beiden Zustellachsenrichtungen regelbarer Antrieb für die Zustelleinrichtung gegeben.

Vorteilhaft ist es, wenn die Zustelleinrichtung als Zustellschlitten ausgebildet ist und zur Ausbildung der Zustellachse eine Schlittenführung vorgesehen ist. Hierdurch kann die Zustelleinrichtung auf möglichst einfache Art und Weise exakt gegenüber einem Gestell bewegt werden.

Wenn die Aufnahmeeinrichtung ebenfalls als Aufnahmeschlitten ausgebildet ist und zur Ausbildung der Bewegungsachse eine Schlittenführung am Zustellschlitten vorgesehen ist, ist es möglich, die gesamte Vorrichtung möglichst kompakt und aus im wesentlichen übereinstimmenden Grundelementen aufzubauen.

Alternativ zur vorgenannten Schlittenausführung der Aufnahmeeinrichtung ist es auch möglich, zur Führung der Aufnahmeeinrichtung eine Führungsbohrung im Zustellschlitten vorzusehen und hierin die entsprechend ausgebildete Aufnahmeeinrichtung zu führen. Dies bietet beispielsweise die Möglichkeit, zur Führung der Aufnahmeeinrichtung eine als Kugelbüchse ausgebildete Linearführung zu verwenden.

Wenn das elastische Element als Feder, etwa als Schraubenfeder, ausgebildet ist, läßt sich die für den Aufprallstoß gewünschte Dämpfung auf besonders einfache Art und Weise durch Auswahl einer Feder mit geeigneter Federkonstante einstellen.

Zusätzlich zum elastischen Element kann auch ein Dämpferelement vorgesehen sein, das separat ausgebildet oder mit dem Federelement zu einer Feder/Dämpfer-Einheit kombiniert sein kann. Dabei dient das Dämpferelment dazu, die Bewegung längs der Bewegungsachse der Aufnahmeeinrichtung zu dämpfen.

Besonders vorteilhaft ist es, wenn die Kraftmeßeinrichtung Bestandteil eines Regelkreises ist, derart, daß das Ausgangssignal der Kraftmeßeinrichtung als Istwert für die Druckbeaufschlagung der Verbindungsstelle und als Eingangssignal für eine Drehzahlregeleinrichtung des etwa als Elektromotor ausgebildeten Stellorgans dient. Zur kompensation des Eigengewichts der an der Kraftmeßeinrichtung hängenden Anordnung kann ein Nullabgleich für die Kraftmessung durchgeführt werden.

Hierdurch ist es nicht nur möglich, die Aufnahmeeinrichtung mit der darin angeordneten Verbindungseinrichtung kraftgesteuert gegen die Verbindungsstelle zu fahren, bis ein dem Maximalwert des Verbindungsdrucks entsprechendes Ausgangssignal der Kraftmeßeinrichtung erzeugt wird, sondern vielmehr eine Kraftregelung durchzuführen, die bei einem Überschreiten des zulässigen Maximalwertes durch das Ausgangssignal eine negative Zustellbewegung, also eine Bewegung von der Verbindungsstelle weg, bewirkt. Die Anordnung der Kraftmeßeinrichtung in einem Regelkreis ermöglicht es somit, die Verbindungseinrichtung bis zum Aufprall auf die Verbindungsstelle mit relativ hoher Geschwindigkeit zuzustellen, um anschließend durch geeignet Zustellbewegungen sowohl in negativer als auch in positiver Richtung den für die Durchführung der Verbindung korrekten Anpreßdruck einzustellen.

Um den Aufprallstoß zu begrenzen, ist es auch möglich, dem Stellorgan eine Positioniereinrichtung zuzuordnen, derart, daß die Zustellbewegung der Zustelleinrichtung bis zum Erreichen einer vorbestimmten Zustelldistanz zwischen der Verbindungseinrichtung und der Verbindungsstelle mit erhöhter Geschwindigkeit ausführbar ist. Diese vorteilhafte Ausführungsform ermöglicht also zunächst eine Wegsteuerung bis zum Erreichen der eingestellten Zustelldistanz und anschließend durch die Kraftregelung eine korrekte Einstellung des Verbindungsdrucks.

Bei Ausbildung eines analogen Regelkreises kann der Kraftmeßeinrichtung ein etwa als Potentiometer ausgebildetes Kraftbegrenzungselement zugeordnet sein. Hierdurch wird eine genaue Einstellung des Maximalwertes für das Kraftausgangssignal möglich.

Darüber hinaus besteht auch die Möglichkeit, zur Ausbildung eines digitalen Regelkreises der Kraftmeßeinrichtung eine Mikroprozessoreinheit zuzuordnen, die das analoge Ausgangssignal der Kraftmeßeinrichtung in ein digitales Ausgangssignal umwandelt. Die Ausbildung des digitalen Regelkreises bietet die Möglichkeit, die erfindungsgemäße Vorrichtung mit einer Programmsteuerung zu versehen, die beispielsweise einen rechnergestützten Betrieb der Vorrichtung ermöglicht, bei dem etwa je nach Bedarf regelmäßig oder unregelmäßig wechselnde Maximalwerte für das Kraftausgangssignal vorgegeben werden können, um einen kontinuierlichen Betrieb der erfindungsgemäßen Vorrichtung selbst bei sich ändernden Parametern für die Verbindungsherstellung zu ermöglichen.

Bevorzugte Ausführungsformen der erfindungsgemäßen Vorrichtung werden nachfolgend anhand der Zeichnungen näher erläutert. Es zeigen:
**Fig. 1** eine Aufnahme/Führungs-Vorrichtung in einer ersten Ausführungsform mit einer Zustelleinrichtung und einer Aufnahmeeinrichtung in Seitenansicht;
**Fig. 2** die Aufnahme/Führungs-Vorrichtung mit abgenommenem Zustellschlitten;
**Fig. 3** die in **Fig. 1** dargestellte Aufnahme/Führungs-Vorrichtung in einer Draufsicht;
**Fig. 4** eine weitere Ausführungsform der Aufnahme/Führungs-Vorrichtung in Seitenansicht.

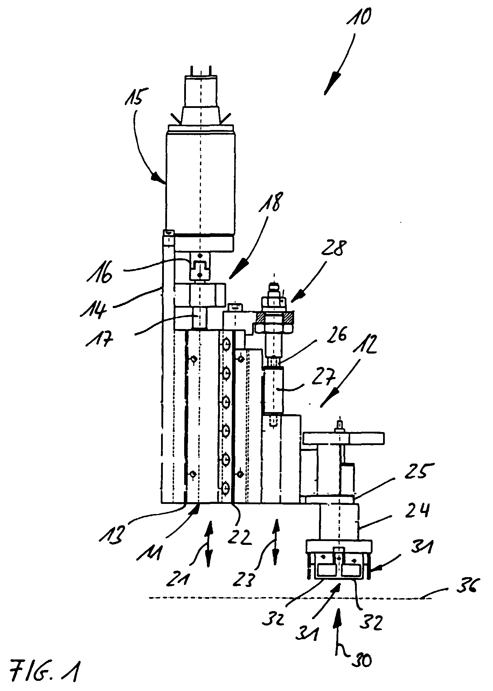

**Fig. 1** zeigt eine Aufnahme/Führungs-Vorrichtung 10 mit einer Zustelleinrichtung 11 und einer Aufnahmeeinrichtung 12. Die Zustelleinrichtung 11 ist als Zustellschlitten ausgebildet, der in einer Schlittenführung 13 an einem Gestell 14 geführt wird.

Oberhalb des Zustellschlittens 11 ist am Gestell 14 ein Stellmotor 15 angeordnet, der über eine Wellenkupplung 16 mit einer Spindelwelle 17 eines Spindelantriebs 18 verbunden ist.

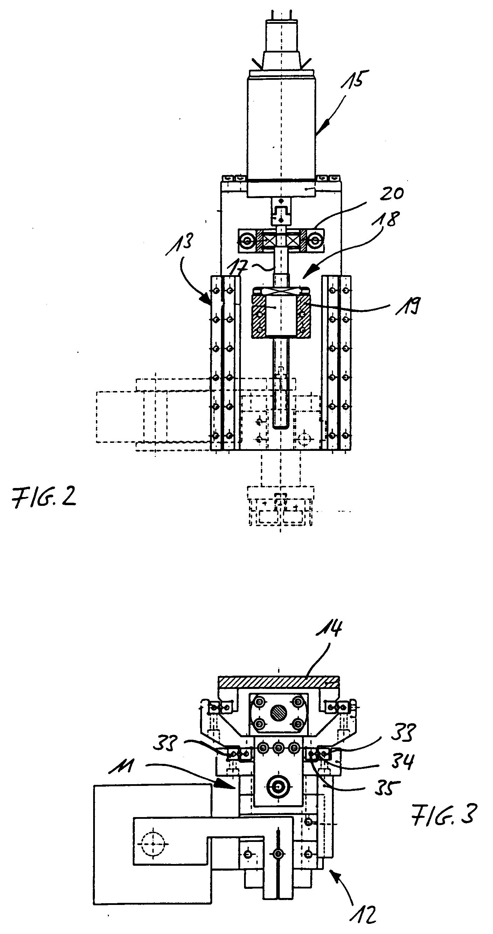

Wie aus **Fig. 2** zu ersehen ist, weist der Spindelantrieb 18 neben der Spindelwelle 17 eine Spindelmutter 19 auf, die mit dem Zustellschlitten 11 verbunden ist, so daß eine Drehung der Spindelwelle 17 in der im Zustellschlitten 11 eingesetzten Spindelmutter 19 eine Längsverschiebung des Zustellschlittens 11 in der Schlittenführung 13 bewirkt. Als weitere Lagerstelle weist die Spindelwelle 17 neben der Spindelmutter 19 noch ein am Gestell 14 oberhalb des Zustellschlittens 11 angeordnetes Stehlager 20 auf.

Die Längsverfahrbarkeit des Zustellschlittens 11 gegenüber dem Gestell 14 ist in **Fig. 1** durch den Doppelpfeil 21 gekennzeichnet. Weiterhin ist **Fig. 1** zu entnehmen, daß der Zustellschlitten 11 auf seiner dem Gestell 14 gegenüberliegenden Seite ebenfalls mit einer Schlittenführung 22 versehen ist, die die als Aufnahmeschlitten 12 ausgebildete Aufnahmeeinrichtung aufnimmt. Die Schlittenführung 22 ist beispielsweise mit einer Kugellinearführung versehen und ermöglicht eine möglichst reibungsarme Führung des Aufnahmeschlittens in Richtung des Doppelpfeils 23, also in dem hier dargestellten Ausführungsbeispiel parallel zur ersten Schlittenführung 13.

Der Aufnahmeschlitten 12 nimmt eine hier als Thermokompressionseinrichtung ausgebildete Verbindungseinrichtung 24 in einer Halterung 25 auf. Die aus dem Aufnahmeschlitten 12 und der Verbindungseinrichtung 24 gebildete Masse hängt an einer Schraubenfeder 26, die in einer mit dem Aufnahmeschlitten 12 verbundenen Knickhülse 27 geführt ist. Dabei ist das eine Ende der Schraubenfeder 26 mit dem Aufnahmeschlitten 12 und das gegenüberliegende Ende der Schraubenfeder 26 mit einer Kraftmeßeinrichtung 28 verbunden, die über eine Halterung 29 mit dem Zustellschlitten 11 verbunden ist.

Aus der vorstehenden Beschreibung wird zusammen mit der Darstellung in **Fig. 1** deutlich, daß eine auf die Verbindungseinrichtung 24 wirkende Reaktionskraft 30 über die Verbindungseinrichtung 24, den Aufnahmeschlitten 12 und die Schraubenfeder 26 unmittelbar auf die Kraftmeßeinrichtung 28 übertragen wird. Unter Vernachlässigung der in der Schlittenführung 22 wirkenden Reibungskräfte und den inneren Reibungskräften der Schraubenfeder 26 ist somit die auf die Verbindungseinrichtung 24 wirkende Reaktionskraft 30 gleich der über die Schraubenfeder 26 in die Kraftmeßeinrichtung 28 eingeleiteten Meßkraft. Die Genauigkeit des Kraftübertragungssystems ist somit im wesentlichen abhängig von einer möglichst reibungsarm ausgebildeten Schlittenführung 22, einem hier als Schraubenfeder 26 ausgebildeten elastischen Element mit möglichst geringer Hysterese und der Genauigkeit der verwendeten Kraftmeßeinrichtung 28.

Bei den heute zur Verfügung stehenden entsprechenden Konstruktionselementen kann also davon ausgegangen werden, daß die Kraftübertragung im wesentlichen verlust- bzw. hysteresefrei erfolgt und die Reaktionskraft 30 gleich der Meßkraft ist.

Die in **Fig. 1** beispielhaft als Thermokompressionseinrichtung ausgebildete Verbindungseinrichtung 24 weist drei übereinstimmend ausgebildete Thermodeneinsätze 31 auf, die in ihren Kontaktbereichen zu einer nicht näher dargestellten Verbindungsstelle mit verringerten Querschnitten 32 versehen sind, welche sich bei Stromdurchfluß aufheizen und zur Einleitung von Druck und Wärme in die Verbindungsstellen dienen. Die Verbindungsseinrichtung 24 dient hier zur gleichzeitigen Verbindung an mehreren, hier sechs, Verbindungsstellen, die in einer gemeinsamen Verbindungsebene 36 angeordnet sind, wie es beim sogenannten Tape-Automated-Bonding (TAB) der Fall ist.

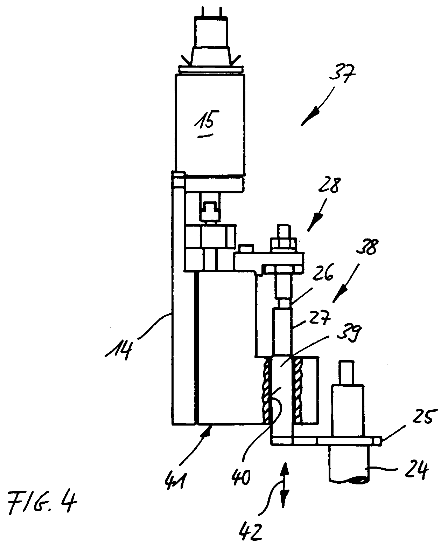

**Fig. 3** zeigt die Aufnahme/Führungs-Vorrichtung 10 in einer Draufsicht, aus der die Ausbildung der Schlittenführungen 13 und 22 besonders gut zu ersehen ist. In dem dargestellten Ausführungsbeispiel bestehen die Schlittenführungen jeweils aus zwei Außenschienen 33, die hier über Zylinderrollenelemente 34 mit Innenschienen 35 zusammenwirken. Die Schlittenführungen 13, 22 können auch auf beliebige andere Art und Weise ausgebildet sein. Für die Meßgenauigkeit der Reaktionskraft 30 (**Fig. 1**) ist hinsichtlich der Schlittenführungen jedoch allein die Qualität der Schlittenführung 22 des Aufnahmeschlittens 12 maßgebend.

Im Betrieb wird die Aufnahme/Führungs-Vorrichtung 10 so genutzt, daß ausgehend von einer Anfangsstellung zunächst der Zustellschlitten 11 gegenüber dem Gestell 14 nach unten in Richtung auf die Verbindungsebene 36 verfahren wird bis entweder ein Druckkraftsignal von der Kraftmeßeinrichtung 28 erzeugt wird, also die Verbindungseinrichtung 24 mit den Thermodeneinsätzen 31 an der Verbindungsebene 36 anliegt oder von einer nicht näher dargestellten Positioniereinrichtung eine voreingestellte Distanz zwischen der Verbindungseinrichtung 24 und der Verbindungsebene 36 ermittelt wird.

In Abhängigkeit von der Größe des erzeugten Druckkraftsignals erfolgt nun eine Auf- oder Abbewegung des Zustellschlittens 11 über eine entsprechende Drehbewegung des Stellmotors 15, bis die gewünschte Druckkraft eingestellt ist, bei der die Verbindung erfolgen soll. Dabei bewegt sich der Aufnahmeschlitten 12 längs seiner Schlittenführung 22 relativ zum Zustellschlitten 11. Das von der Kraftmeßeinrichtung 28 erzeugte Kraftsignal ist daher stets analog zur Auslenkung der Feder 26 und dient zur Drehrichtungssteuerung des Stellmotors 15.

Die Aufnahme/Führungsvorrichtung 10 läßt sich auch zur online-Bondprozeßkontrolle nutzen, indem beispielsweise online die beim Herstellen einer Drahtbondverbindung erfolgende Drahtdeformation des Bonddrahtes gemessen wird. Dies kann als Wegdifferenzmessung erfolgen, wobei das Druckkraftsignal beim Auftreffen der Verbindungseinrichtung 24 auf die Verbindungsebene 36 den ersten Meßpunkt und das Erreichen der vorgegebenen maximalen Druckkraft den zweiten Meßpunkt definiert und die zwischenliegende, vom Drehgeber des Stellmotors 15 oder einem anderen Meßgeber zurückgelegte bzw. erfaßte Wegstrecke der Drahtdeformation des Bonddrahts entspricht.

**Fig. 4** zeigt eine weitere mögliche Aufnahme/Führungs-Vorrichtung 37, die abweichend von der Aufnahme/Führungs-Vorrichtung 10 eine Aufnahmeeinrichtung 38 aufweist, die mit einem Führungskolben 39 in einer Führungsbohrung 40 eines Zustellschlittens 41 in Richtung des Doppelpfeils 42 hin- und herbewegbar geführt ist. Zur Ausbildung einer möglichst reibungsarmen Führung ist die Führungsbohrung 40 mit einer nicht näher dargestellten Kugelbüchse zur linearen Führung des Führungskolbens 39 versehen. Ansonsten stimmt die Aufnahme/Führungs-Vorrichtung 37 in weiteren Details mit der vorstehend beschriebenen Aufnahme/Führungs-Vorrichtung 10 überein.

## Patentansprüche

1. Vorrichtung (10, 37) zur Aufnahme und Führung einer Werkzeugeinrichtung (24), insbesondere eine Verbindungseinrichtung, mit einer mittels eines Stellorgans (15) längs einer Zustellachse (21) über eine Zustelleinrichtung (11, 41) bewegbaren Aufnahmeeinrichtung (12, 38) zur Aufnahme der Werkzeugeinrichtung und mit einer Kraftmeßeinrichtung (28),
dadurch **gekennzeichnet**,
daß die Aufnahmeeinrichtung (12, 38) relativ zur Zustelleinrichtung (11, 41) bewegbar ist, die Kraftmeßeinrichtung (28) an der Zustelleinrichtung angeordnet ist, und zwischen der Kraftmeßeinrichtung (28) und der Aufnahmeeinrichtung (12, 38) ein elastisches Element (26) angeordnet ist, derart, daß das elastische Element (26) bei einer Relativbewegung zwischen der Kraftmeßeinrichtung (28) und der Aufnahmeeinrichtung (12) deformiert wird.

2. Vorrichtung nach Anspruch 1,
dadurch **gekennzeichnet**,
daß zur Bewegung der Zustelleinrichtung (11, 41) längs der Zustellachse (21) ein mit dem Stellorgan (15) gekoppelter, vorzugsweise als Spindeltrieb (18) ausgebildeter Drehantrieb vorgesehen ist.

3. Vorrichtung nach Anspruch 1 oder 2,
dadurch **gekennzeichnet**,
daß die Zustelleinrichtung als Zustellschlitten (11, 41) ausgebildet ist und zur Ausbildung der Zustellachse (21) eine Schlittenführung (13) vorgesehen ist.

4. Vorrichtung nach einem oder mehreren der vorhergehenden Ansprüche,
**dadurch gekennzeichnet, daß**
die Aufnahmeeinrichtung als Aufnahmeschlitten (12) ausgebildet ist und zur Ausbildung der Bewegungsachse (23) eine Schlittenführung (22) am Zustellschlitten (11) vorgesehen ist.

5. Vorrichtung nach einem oder mehreren der Ansprüche 1 bis 3,
**dadurch gekennzeichnet, daß**
die Aufnahmeeinrichtung zur Ausbildung der Bewegungsachse (23) in einer Führungsbohrung (40) des Zustellschlittens (41) geführt ist.

6. Vorrichtung nach einem oder mehreren der vorangehenden Ansprüche,
**dadurch gekennzeichnet, daß**
das elastische Element als Feder, vorzugsweise als Schraubenfeder (26), ausgebildet ist.

7. Vorrichtung nach einem oder mehreren der vorhergehenden Ansprüche,
**dadurch gekennzeichnet, daß**
die Kraftmeßeinrichtung (28) Bestandteil eines Regelkreises ist, derart, daß das Ausgangssignal der Kraftmeßeinrichtung als Istwert für die Druckbeaufschlagung einer Verbindungsstelle (36) und als Eingangssignal für eine Drehzahlregeleinrichtung des vorzugsweise als Elektromotor ausgebildeten Stellorgans (15) dient.

8. Vorrichtung nach Anspruch 7,
**dadurch gekennzeichnet, daß**
dem Stellorgan (15) eine Positioniereinrichtung zugeordnet ist, derart, daß die Zustellbewegung der Zustelleinrichtung (11, 41) bis zum Erreichen einer vorbestimmten Zustelldistanz zwischen der Verbindungseinrichtung (24) und der Verbindungsebene (36) mit erhöhter Drehzahl ausführbar ist.

9. Vorrichtung nach einem oder mehreren der vorhergehenden Ansprüche,
**dadurch gekennzeichnet, daß**
bei Ausbildung eines analogen Regelkreises der Kraftmeßeinrichtung (28) ein vorzugsweise als Potentiometer ausgebildetes Kraftbegrenzungselement zugeordnet ist.

10. Vorrichtung nach einem oder mehreren der Ansprüche 1 bis 8,
**dadurch gekennzeichnet, daß**
zur Ausbildung eines digitalen Regelkreises der Kraftmeßeinrichtung (28) eine Mikroprozessoreinheit zugeordnet ist, die das analoge Ausgangssignal der Kraftmeßeinrichtung (28) in ein digitales Ausgangssignal umwandelt.

## Claims

1. An apparatus (10, 37) for taking up and guiding a tool device (24), especially a connection device, comprising a take-up device (12, 38) for taking up the tool device, said take-up device being movable by means of a servo-element (15) along a feed axis (21) through a feed device (11, 41), as well as a force measuring device (28), wherein the take-up device (12, 38) can move relative to the feed device (11, 41), the force measuring device (28) is disposed on the feed device, and an elastic element (26) is disposed between the force measuring device (28) and the take-up device (12, 38), in such a way that the elastic element (26) is deformed when a relative motion takes place between the force measuring device (28) and the take-up device (12).

2. The apparatus of Claim 1, wherein, in order to move the feed device (11, 41) along the feed axis (21), a rotary drive, preferably designed as a spindle drive (18), and coupled to the servo-element (15), is provided.

3. The apparatus of Claim 1 or 2, wherein the feed device is designed as a feed sled (11, 41), and a sled guide (13) is provided to form the feed axis (21).

4. The apparatus of one or more of the preceding Claims, wherein the take-up device is designed as a take-up sled (12), and a sled guide (22) is provided at the feed sled (11) so as to form the axis of motion (23).

5. The apparatus of one or more of Claims 1 to 3, wherein the take-up device is guided in a guide bore (40) of the feed sled (41) so as to form the axis of motion (23).

6. The apparatus of one or more of the preceding claims, wherein the elastic element is designed as a spring, preferably a coil spring (26).

7. The apparatus of one or more of the preceding claims, wherein the force measuring device (28) is a component of a control loop, in such a way that the output signal of the force measuring device serves as the current value for applying pressure to a connection point (36) and as an input signal for an rpm-control device of the servo-element (15), which preferably is designed as an electric motor.

8. The apparatus of Claim 7, wherein a positioning device is associated with the servo-element (15), in such a way that the feed motion of the feed device (11, 41) can be executed at a higher rpm until a prescribed feed distance is reached between the connection device (24) and the connection plane (36).

9. The apparatus of one or more of the preceding Claims, wherein, in connection with forming an analog control loop, a force limiting element, preferably designed as a potentiometer, is associated with the force measuring device (28).

10. The apparatus of one or more of Claims 1 to 8, wherein a microprocessor unit is associated with the force measuring device (28) to form a digital control loop, so as to convert the analog output signal of the force measuring device (28) into a digital output signal.

## Revendications

1. Dispositif (10, 37) pour fixer et guider un outil (24), en particulier un élément d'assemblage, comprenant un élément de fixation (12, 38) déplaçable au moyen d'un organe de réglage (15) le long d'un axe de positionnement (21) par l'entremise d'un élément de positionnement (11, 41) pour fixer l'outil, et avec un élément dynamométrique (28), caractérisé en ce que l'élément de fixation (12, 38) peut être déplacé par rapport à l'élément de positionnement (11, 41), l'élément dynamométrique (28) est agencé sur l'élément de positionnement et, entre l'élément dynamométrique (28) et l'élément de fixation (12, 38), est agencé un élément élastique (26) de telle sorte que l'élément élastique (26) soit déformé lors d'un mouvement relatif entre l'élément dynamométrique (28) et l'élément de fixation (12).

2. Dispositif selon la revendication 1, caractérisé en ce qu'il est prévu, pour déplacer le dispositif de positionnement (11, 41) le long de l'axe de positionnement (21), un système d'entraînement en rotation couplé à l'organe de réglage (15), de préférence réalisé sous la forme d'un entraînement à vis sans fin (18).

3. Dispositif selon la revendication 1 ou 2, caractérisé en ce que l'élément de positionnement se présente sous la forme d'un coulisseau de positionnement (11, 41) et il est prévu une glissière (13) pour former l'axe de positionnement (21).

4. Dispositif selon une ou plusieurs des revendications précédentes, caractérisé en ce que l'élément de fixation se présente sous la forme d'un coulisseau de fixation (12) et il est prévu, pour former l'axe de déplacement (23), une glissière (22) sur le coulisseau de positionnement (11).

5. Dispositif selon une ou plusieurs des revendications 1 à 3, caractérisé en ce que l'élément de fixation est guidé, pour former l'axe de déplacement (23), dans un alésage de guidage (40) du coulisseau de positionnement (41).

6. Dispositif selon une ou plusieurs des revendications précédentes, caractérisé en ce que l'élément élastique se présente sous la forme d'un ressort, de préférence sous la forme d'un ressort hélicoïdal (26).

7. Dispositif selon une ou plusieurs des revendications précédentes, caractérisé en ce que l'élément dynamométrique (28) fait partie d'un circuit de régulation de telle sorte que le signal de sortie de l'élément dynamométrique serve de valeur effective pour l'application d'une pression à un emplacement d'assemblage (36) et de signal d'entrée pour un élément de réglage de la vitesse de rotation de l'organe de réglage (15) réalisé de préférence sous la forme d'un moteur électrique.

8. Dispositif selon la revendication 7, caractérisé en ce que l'on affecte à l'organe de réglage (15) un élément de positionnement de telle sorte que le déplacement de positionnement de l'élément de positionnement (11, 41) puisse être réalisé jusqu'à atteindre une distance de positionnement prédéterminée entre l'élément d'assemblage (24) et le plan d'assemblage (36) avec une plus grande vitesse de rotation.

9. Dispositif selon une ou plusieurs des revendications précédentes, caractérisé en ce que, lors de la formation d'un circuit de régulation analogique, on affecte à l'élément dynamométrique (28) un élément de limitation de force qui se présente de préférence sous la forme d'un potentiomètre.

10. Dispositif selon une ou plusieurs des revendications 1 à 8, caractérisé en ce que, pour former un circuit de régulation numérique, on affecte à l'élément dynamométrique (28) une unité de microprocesseur, qui convertit le signal de sortie analogique de l'élément dynamométrique (28) en un signal de sortie numérique.
